# EUROPEAN PATENT APPLICATION

(11) **EP 2 804 289 A1**
(43) Date of publication of application: **19.11.2014**
(21) Application number: 13290109.1
(22) Date of filing: 17.05.2013
(51) Int. Cl.: H02J 9/06, H02J 9/04

(54) **Power supply system and method for supplying power**

(71) Applicant: ALCATEL LUCENT, 92100 Boulogne-Billancourt (FR)
(72) Inventor: Ilchmann, Frank, 13158 Berlin (DE); Klotzsche, Thomas, 10178 Berlin (DE); Bross, Justus, 10405 Berlin (DE)
(74) Representative: Louis Pöhlau Lohrentz

(57) **Abstract**

The invention relates to a power supply system (26) for at least one electrical load (12), comprising at least one uninterruptible power supply (UPS) (14), a power output connection of the UPS (14) being connected to the at least one electrical load (12), at least one electrical energy storage means (28) and at least one switching means (32, 36), wherein
- in a first mode of operation (48), a power input connection of the at least one UPS (14) and the at least one electrical energy storage means (28) are connected to a power mains (16) via the switching means (32, 36),
- in a second mode of operation (52), the power input connection of the at least one UPS (14) is connected to the electrical energy storage means (28) via the switching means (32, 36). The invention further relates to a method for operating such a power supply system.

## Description

### Field of the invention

The invention relates to a power supply system and method for providing power to at least one electrical load during a mains outage.

### Background of the Invention

Critical electrical loads, such a server systems, medical devices and similar equipment need to be protected from power outages to ensure continuous operation. To this end, so-called uninterruptible power supplies (UPS) are used. An UPS comprises a battery, an AC/DC-input converter and a DC/AC output converter. In simple systems, the load is directly connected to the mains and the power output of the UPS is switched to the power input of the load in case of a power failure. This leads to a certain switching time, which often is too large for sensitive equipment. Generally, the switching time is required to be less than 4 ms. To overcome this problem, so-called online or double-conversion UPS can be used. In such systems, the load has no direct connection to the mains, but rather is constantly connected to the DC/AC output converter of the UPS. The load thus constantly draws energy from the UPS battery, which in turn is constantly recharged by the AC/DC input converter. This, however, places special requirements on the UPS. Since all components operate under constant load, they have to be very reliable and of high quality, resulting in a high price.

A further problem with commonly used UPS systems is the relatively low bridging time, which not always allows for a controlled system shutdown or similar measures necessary during a power outage. One possible solution is the use of multiple UPS for each critical load, as for example disclosed in US 6 191 500 A. This, however, does further increase the cost of the system. This is in particular problematic in large installations, for example server farms, in which multiple critical loads must be protected. Since a single UPS on a single power line does not necessarily prevent a system shutdown, the critical loads are often divided. Each critical load is protected by a dedicated UPS and each UPS is connected to a different power line. It is obvious that this solution is especially costly.

It is thus the objective of the present invention to provide a power supply system and a method for supplying power to a critical load during a mains power outage that can provide a long bridging time in a cost efficient manner.

### Summary of the invention

This problem is solved by a power supply system according to claim 1, a method according to claim 7 and a control unit according to claim 14.

Such a power supply system for at least one electrical load, comprises at least one uninterruptible power supply (UPS), a power output connection of the UPS being connected to the at least one electrical load, at least one electrical energy storage means and at least one switching means. According to the invention, in a first mode of operation, a power input connection of the at least one UPS and the at least one electrical energy storage means are connected to a power mains via the switching means, while in a second mode of operation, the power input connection of the at least one UPS is connected to the electrical energy storage means via the switching means.

The first mode of operation represents the normal operation of the system while mains power is available. The UPS works here works in online mode, i.e. no switching is required to supply emergency power to the critical load. The second mode of operation can be employed during a power outage. The load still is supplied via the UPS. However, the UPS remains in online mode, the power now being provided by the electrical energy storage means instead of the failed power mains.

Since the UPS assures the continuous power supply, switching the UPS input from the failed mains to the electrical energy storage device needs not to be fast. Consequently the switching means can be relatively simple. Moreover, the power provided by the electrical energy storage device is continuously filtered by the UPS, so the output quality of the device can be lower than that of an UPS. This allows for usage of any available high-capacity energy storage means to extend the bridging time of an UPS in a cost-effective manner. In particular, it is possible to use storage means that already exist at a given facility, for example buffer storage systems of photovoltaic installations, as part of the power supply system according to the invention. During operation in the first mode of operation, the energy storage means can even be used for other purposes, e.g. in the above mentioned case for buffering the photovoltaic installation.

In a further preferred embodiment of the invention, the power supply system further comprises a control unit for controlling the at least one UPS, the at least one electrical energy storage means and the at least one switching means. This can be provided as part of the energy storage means or in form of a separate computer, allowing for precise control of the system.

Preferably, the control unit is adapted to detect a power outage in the at least one power mains. This can be implemented via communication with the UPS, which is usually equipped to perform such a detection anyway. Alternatively, the control unit can monitor the power mains via a voltage or current sensor. It is also possible to not only detect full power outages, but also brownouts, frequency fluctuations, overvoltages or similar events which could make it necessary to disconnect the load from the mains and switch over to backup power.

The control unit is further preferably adapted to switch the system from the first to the second mode on detection of a power outage and from the second to the first mode on detection of the end of a power outage. In other words, the control unit is in control of the switching means.

In a further preferred embodiment of the invention, the control unit is adapted to receive power from the UPS. This makes the system self-contained, i.e. no additional energy input is required to keep the control of the system operational during a power outage.

The invention further relates to a method for supplying power to at least one electrical load, in which power is supplied to the at least one electrical load via a uninterruptible power supply (UPS). In a first mode of operation, power is supplied to the at least one UPS by the at least one electrical mains, and in a second mode of operation, power is supplied to the at least one UPS by at least one electrical energy storage means. Upon detection of a power outage in the at least one electrical mains, power supply to the UPS is switched from the first to the second mode of operation.

As for the power supply system described above, the method according to the invention makes it possible to employ a comparatively cheap electrical energy storage means to extend the bridging time of a UPS while retaining the high output quality and fast switching time the UPS provides.

In a preferred embodiment of the invention, the power supply to the UPS is switched between the modes of operation by a mechanical switching means controlled by a control unit. This allows for a simple, cost-effective and robust switching of the power supply.

Preferably, the power outage is detected by the UPS, which communicates a signal indicating the power outage to the control unit. This is an especially cost-effective solution, since the UPS needs appropriate sensor means anyway in order to fulfill its function. However, alternatively or in addition, voltage or current sensors can be employed to monitor the power mains.

In a further preferred embodiment of the invention, the control unit is adapted to switch the system from the first to the second mode on detection of a power outage and from the second to the first mode on detection of the end of a power outage. If no separate sensor is used to monitor the power mains, the end of the power outage can be detected by periodically switching from the power supply to the UPS from the second to the first mode of operation and detecting whether the UPS draws power from the at least one power mains when in the first mode of operation.

In a further preferred embodiment of the invention, when switching between the modes of operation, the electrical energy storage means is put into a stand-by mode while the switching means is operated. Thus, the power load during switching is minimized, preventing damage to the components of the system.

The invention further relates to a control unit adapted to detecting a power outage in at least one electrical mains and, on detection of the power outage, switching a power input to an uninterruptible power supply (UPS) associated with the at least one electrical mains and supplying power to at least one critical load from the at least one electrical mains to an electrical energy storage device. Such a control unit can be used to perform the method described above to reach the advantages described there.

In a further embodiment of the invention, the control unit is further adapted to detecting an end of the power outage and switching the power input to the UPS (14) back to the associated electrical mains, in order to return the system to its normal mode of operation.

### Brief description of the drawings

The present invention will be more completely understood by the following detailed description of embodiments of the present invention with reference to the figures.
- Fig. 1: A schematic representation of a power supply system according to the state of the art;
- Fig. 2: A schematic representation of an alternative power supply system according to the state of the art;
- Fig. 3: A schematic representation of a power supply system according to the invention;
- Fig. 4: An operational chart depicting the operation of the power supply system according to Fig. 3;
- Fig. 5: A chart depicting the different operational states of the power supply system according to Fig. 3.

### Detailed description of embodiments

In the following, preferred embodiments of the present invention are described for illustrative reasons, while the scope of the present invention is defined by the claims. Unless otherwise derivable by the context, the embodiments are not meant to be exclusive, but rather to be combinable thereby forming further embodiments.

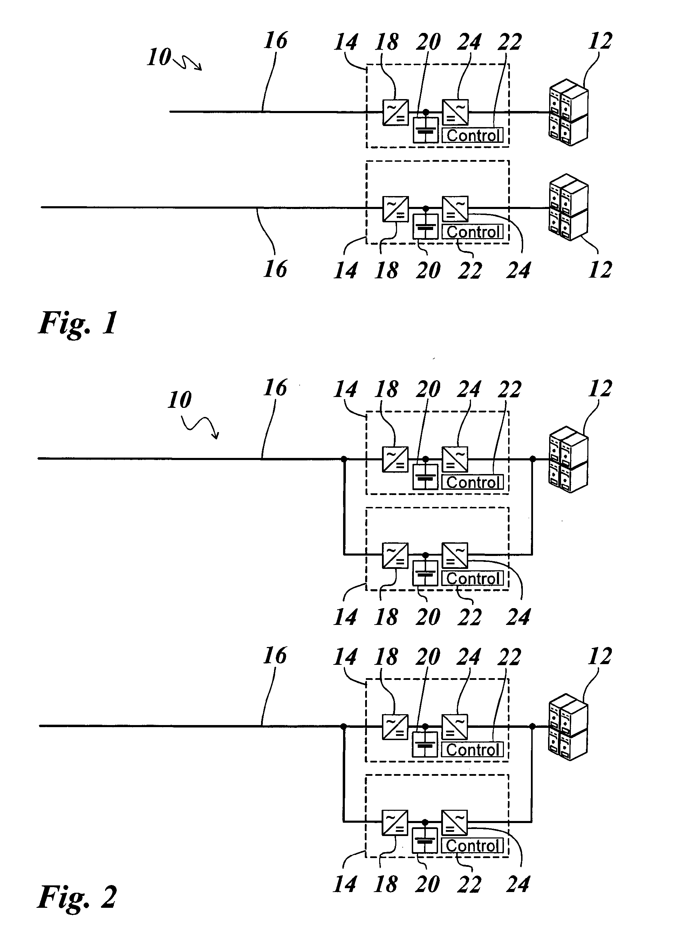

In order to further illustrate the background of the invention, schematics of power supply systems 10 according to the state of the art are shown in figures 1 and 2. Critical electrical loads 12, such as servers of a server farm, are protected from power outages via uninterruptible power supplies (UPS) 14, which in turn are connected to corresponding electrical mains busses 16.

The UPS 14 each comprise an input AC/DC converter 18, which is connected to the bus 16, a battery 20, control electronics 22 and an output DC/AC converter 24 connected to the load 12. As long as power is available on the busses 16, the UPS 14 draw power from the busses 16, while the loads 12 in turn draw power from the UPS 14. If one of the busses 16 fails, the associated load 12 can still draw power from the battery 20 of the associated UPS 14.

Such a power supply system 10 can reliably deliver power to the loads 12 during short outages. Due to the online operation of the UPS 14, there is no discernibly switching time. However, the online operation makes it necessary to use very reliable and high-quality components for the UPS 14, making them expensive. Another problem lies in the limited capacity of the batteries 20 of the UPS 14. In the case of longer outages, the UPS 14 may not be able to supply the loads 12 during the whole outage, so that the loads 12 have to be shut down.

In order to increase the bridging time of the power supply system, two UPS 14 can be arranged in parallel, as shown in Fig. 2. While this effectively doubles the time the loads 12 can be supported by the UPS 14 alone, this drastically increases cost.

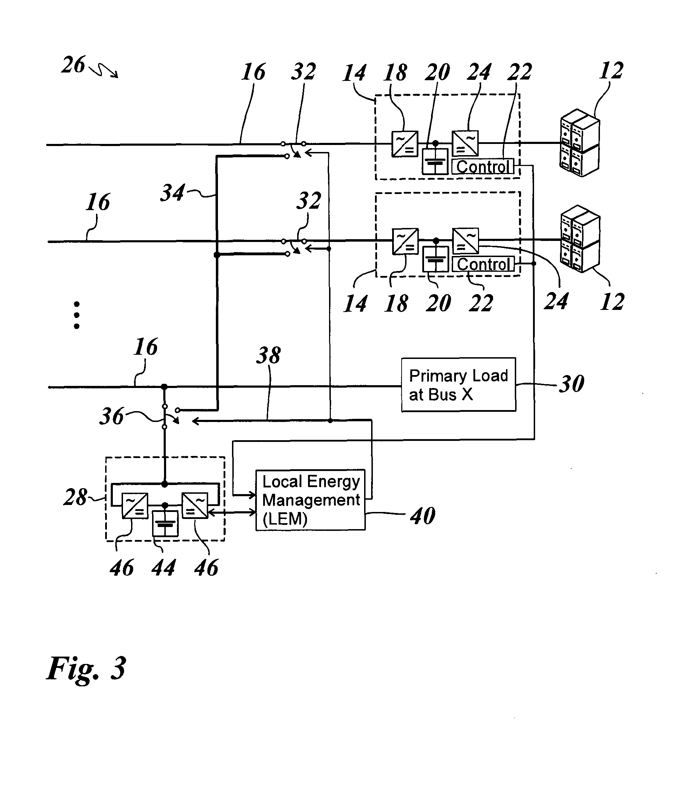

In order to provide a cheap and reliable power supply system 26, as depicted in fig. 3, is provided. In this embodiment of the invention, critical loads 12 are protected by UPS 14, as in usual systems, However, an additional energy storage device 28 is used to extend the bridging time of the UPS 14. A further non-critical load 30 is connected to a bus 16 without UPS protection. The busses 16 feeding the UPS 14 associated with the critical loads 12 contain additional switches 32, which can alternately connected the UPS 14 with the power mains or with a line 34. A further switch 36 alternately connects the storage device 28 with the power mains or the line 34. Control lines 38 connect the switches 32, 36, the UPS 14 and the storage device 28 with a energy management system 40.

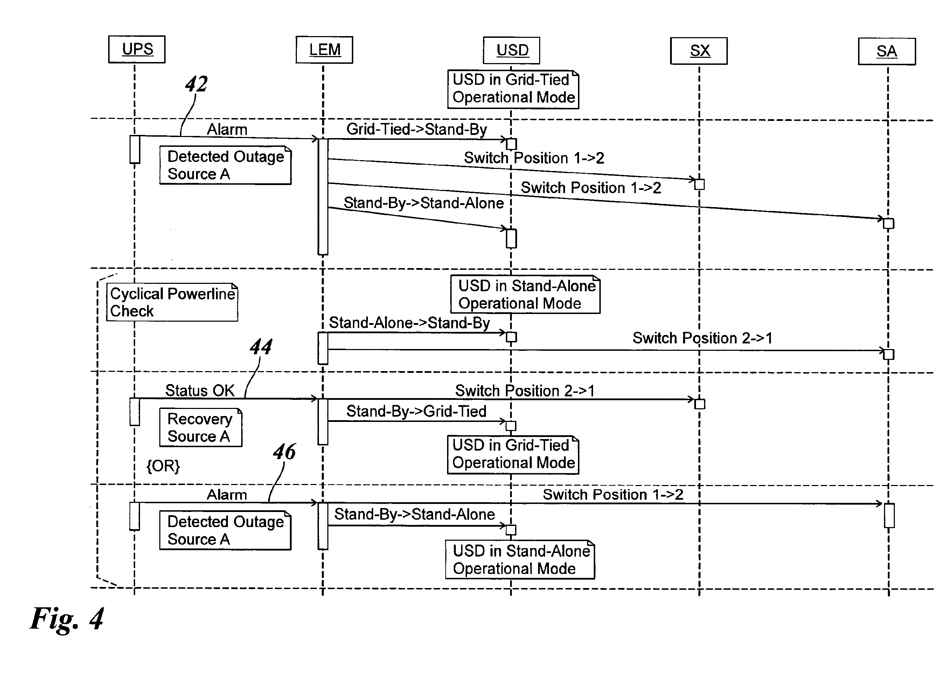

Fig. 4 shows a chart depicting the mode of operation of the system 26. When a UPS 14 detects a power outage on the associated bus 16, a signal 42 is generated and sent to the energy management system 40, while the battery 20 of the UPS provides the associated critical load 12 with power. The energy storage device 28 is then put into stand-by mode by the energy management system 40. The switch 32 associated with the UPS 14 on the failed power bus 16 and the switch 36 are then switched, so as to connect the UPS 14 and the energy storage device 28 to the line 34. Subsequently the energy storage device is then put into stand-alone mode, now supplying power from its internal battery 44 via the DC-AC-converters 46 to the UPS 14. During the switching the critical load 12 is constantly supplied by the UPS 14. Switches 32 and 36 thus do not need to be operated in a particular fast manner. Since the switching is performed while the storage device 28 is in stand-by mode, no particularly high load is applied to the switches, so that robust and cost effective mechanical switches can be used.

In order to determine whether the power is still out, the storage device is periodically put into stand-by mode and the switch 32 is switched to reconnect the UPS 14 to the bus 16. If the UPS 14 detects voltage on the bus 16, i.e. an end of the outage, a signal 44 is generated by the UPS 14 and transmitted to the energy management system 40, which in turn actuates switch 36 to reconnect the energy storage device 28 to the bus 16. After that, the energy storage device 28 is returned from stand-by mode to grid tied mode, so that the power supply system is returned to its normal grid-supplied mode of operation. In case the UPS 14 does not detect any voltage on the bus 16, on the other hand, a signal 46 is generated and transmitted to the energy management system 40, indicating an ongoing power outage. The energy management system 40 then returns switch 32 in the position to connect the UPS 14 to the energy storage device 28 and returns the energy storage device 28 to stand-alone mode. The UPS 14 is then again supplied by the energy storage device 28.

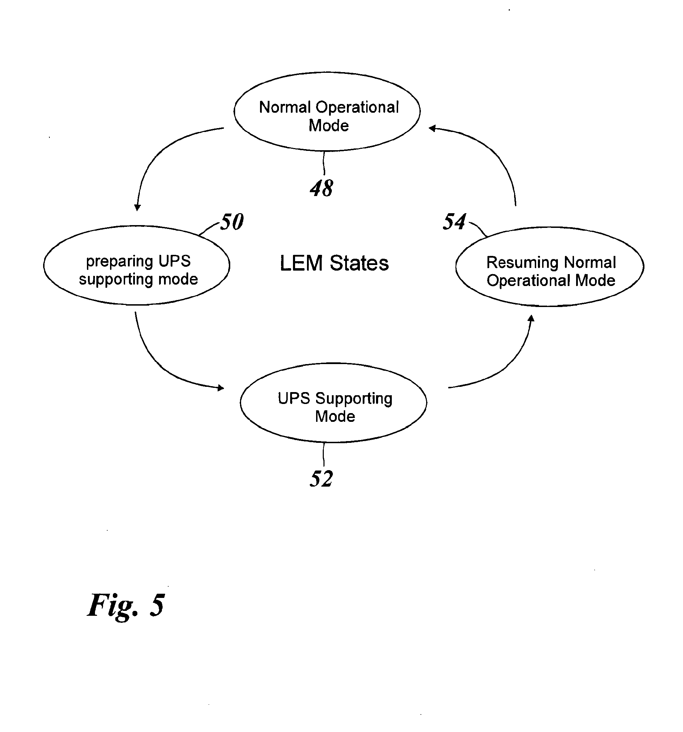

These checks for the status of the bus 16 are then periodically repeated until the power outage is over. The operation can be summarized as cycling through 4 operational states of the energy management system 40, as shown in Fig. 5. Starting from a normal operational mode 48, the energy management system 40 moves to a preparatory state 50 preparing the power supply system 26 for UPS support by putting the energy storage device 28 into standby and actuating switches 32 and 36. After the switching, the energy storage device is switched to stand-alone mode, thus putting the power supply system 26 into UPS-supported mode 52. During the periodic checks for the status of the bus 16, the energy management system 40 again puts the power supply system in a preparatory state 54 for preparing the return to normal operations mode 48 by putting the energy storage device 28 into stand-by and actuating the switches again to connect the UPS 14 to the bus 16. If the outage is over, the system then returns to normal operation with a grid-tied energy storage system. If the outage is still ongoing, the power supply system continues to cycle through the described states 48, 50, 52, 54.

Since in all operational states, the power input for the critical loads 12 is filtered by the UPS 14, the energy storage device 28 does not need to be of particularly high quality. The energy storage device 28 just needs to provide an output of sufficient quality to avoid forcing the UPS 14 into backup mode due to unusable external power quality while the system is operating in stand-alone mode. It is possible to use existing devices, such as buffer storage systems from photovoltaic installations. Such devices are significantly cheaper than additional UPS, thus allowing the installation of a very cost-effective power supply system 26.

## Claims

1. Power supply system (26) for at least one electrical load (12), comprising at least one uninterruptible power supply (UPS) (14), a power output connection of the UPS (14) being connectable to the at least one electrical load (12), at least one electrical energy storage means (28) and at least one switching means (32, 36), wherein
- in a first mode of operation (48), a power input connection of the at least one UPS (14) and the at least one electrical energy storage means (28) are connected to a power mains (16) via the switching means (32, 36),
- in a second mode of operation (52), the power input connection of the at least one UPS (14) is connected to the electrical energy storage means (28) via the switching means (32, 36).

2. Power supply system (26) according to claim 1, further comprising a control unit (40) for controlling the at least one UPS (14), the at least one electrical energy storage means (28) and the at least one switching means (32, 36).

3. Power supply system (26) according to claim 2, **characterized in that** the control unit (40) is adapted to detect a power outage in the at least one power mains (16).

4. Power supply system (26) according to claim 3, **characterized in that** the control unit (40) is adapted to detect the power outage by receiving a signal from the at least one UPS (14) and/or by means of a voltage sensor associated with the power mains (16).

5. Power supply system (26) according to claim 2 or 3, **characterized in that** the control unit (40) is adapted to switch the system (26) from the first to the second mode on detection of a power outage and from the second to the first mode on detection of the end of a power outage.

6. Power supply system (26) according to any of claims 2 to 5, **characterized in that** the control unit (40) is adapted to receive power from the UPS (14) and/or the energy storage means (28).

7. Method for supplying power to at least one electrical load (12), in which power is supplied to the at least one electrical load (12) via a uninterruptible power supply (UPS) (14), wherein
- in a first mode of operation (48), power is supplied to the at least one UPS (14) by the at least one electrical mains (16), and
- in a second mode of operation (52), power is supplied to the at least one UPS (14) by at least one electrical energy storage means (28), and
- upon detection of a power outage in the at least one electrical mains (16), power supply to the UPS (14) is switched from the first (48) to the second mode of operation (50).

8. Method according to claim 7, **characterized in that** the power supply to the UPS (14) is switched between the modes of operation (48, 52) by a mechanical switching means (32, 36) controlled by a control unit (40).

9. Method according to claim 8, **characterized in that** the power outage is detected by the UPS (14), which communicates a signal (42) indicating the power outage to the control unit (40).

10. Method according to claim 8, **characterized in that** the power outage is detected by the control unit (40) via monitoring a voltage and/or current sensor associated with the at least one power mains (16).

11. Method according to any of claims 8 to 10, **characterized in that** after the end of the power outage is detected, power supply to the UPS (14) is switched from the second (52) to the first mode of operation (48).

12. Method according to any of claims 8 to 11, **characterized in that** the end of the power outage is detected by periodically switching the power supply to the UPS (14) from the second (52) to the first mode of operation (48) and detecting whether the UPS (14) draws power from the at least one power mains (16) when in the first mode of operation (48).

13. Method according to any of claims 8 to 12, **characterized in that** when switching between the modes of operation (48, 52), the electrical energy storage means (28) is put into a stand-by mode while the switching means (32, 36) is operated.

14. Control unit (40) for a power supply system (26) adapted for performing the following step:
- detecting a power outage in at least one electrical mains (16);
- on detection of the power outage, switching a power input to an uninterruptible power supply (UPS) (14) associated with the at least one electrical mains (16) and supplying power to at least one critical load from the at least one electrical mains (16) to an electrical energy storage device (28).

15. Control unit (40) according to claim 14, **characterized in that** the control unit is further adapted for performing the following steps:
- in case of a power outage, detecting an end of the power outage and switching the power input to the UPS (14) back to the associated electrical mains.

## Amended claims

### Amended claims in accordance with Rule 137(2) EPC.

**1.** Power supply system (26) for at least one electrical load (12), comprising at least one uninterruptible power supply (UPS) (14), a power output connection of the UPS (14) being connectable to the at least one electrical load (12), at least one electrical energy storage means (28), at least one switching means (32, 36) and a control unit (40) for controlling the at least one UPS (14), the at least one electrical energy storage means (28) and the at least one switching means (32, 36), wherein
- in a first mode of operation (48), a power input connection of the at least one UPS (14) and the at least one electrical energy storage means (28) are connected to a power mains (16) via the switching means (32, 36),
- in a second mode of operation (52), the power input connection of the at least one UPS (14) is connected to the electrical energy storage means (28) via the switching means (32, 36),
- upon detection of a power outage in the at least one electrical mains (16), power supply to the UPS (14) is switched from the first (48) to the second mode of operation (50), and
- the control unit (40) is adapted to detect the power outage in at least one power mains by receiving a signal from the at least one UPS (14) and/or by means of a voltage sensor associated with the power mains (16).

**2.** Power supply system (26) according to claim 1, **characterized in that** the control unit (40) is adapted to switch the system (26) from the first to the second mode on detection of a power outage and from the second to the first mode on detection of the end of a power outage.

**3.** Power supply system (26) according to any of claims 1 to 2, **characterized in that** the control unit (40) is adapted to receive power from the UPS (14) and/or the energy storage means (28).

**4.** Method for supplying power to at least one electrical load (12), in which power is supplied to the at least one electrical load (12) via a uninterruptible power supply (UPS) (14), wherein
- in a first mode of operation (48), power is supplied to the at least one UPS (14) by the at least one electrical mains (16), and
- in a second mode of operation (52), power is supplied to the at least one UPS (14) by at least one electrical energy storage means (28), and
- upon detection of a power outage in the at least one electrical mains (16), power supply to the UPS (14) is switched from the first (48) to the second mode of operation (50), wherein the power outage in at least one power mains is detected by a control unit by receiving a signal from the at least one UPS (14) and/or by means of a voltage sensor associated with the power mains (16).

**5.** Method according to claim 4, **characterized in that** the power supply to the UPS (14) is switched between the modes of operation (48, 52) by a mechanical switching means (32, 36) controlled by the control unit (40).

**6.** Method according to claim 5, **characterized in that** after the end of the power outage is detected, power supply to the UPS (14) is switched from the second (52) to the first mode of operation (48).

**7.** Method according to any of claims 5 to 6, **characterized in that** the end of the power outage is detected by periodically switching the power supply to the UPS (14) from the second (52) to the first mode of operation (48) and detecting whether the UPS (14) draws power from the at least one power mains (16) when in the first mode of operation (48).

**8.** Method according to any of claims 5 to 7, **characterized in that** when switching between the modes of operation (48, 52), the electrical energy storage means (28) is put into a stand-by mode while the switching means (32, 36) is operated.

**9.** Control unit (40) for a power supply system (26) adapted for performing the following step:
- detecting a power outage in at least one electrical mains (16), wherein the power outage in at least one power mains is detected by receiving a signal from the at least one UPS (14) and/or by means of a voltage sensor associated with the power mains (16)
- on detection of the power outage, switching a power input to an uninterruptible power supply (UPS) (14) associated with the at least one electrical mains (16) and supplying power to at least one critical load from the at least one electrical mains (16) to an electrical energy storage device (28).

**10.** Control unit (40) according to claim 9, **characterized in that** the control unit is further adapted for performing the following steps:
- in case of a power outage, detecting an end of the power outage and switching the power input to the UPS (14) back to the associated electrical mains.
